# EUROPEAN PATENT SPECIFICATION

(11) **EP 4 644 609 B1**
(45) Date of publication and mention of the grant of the patent: **15.07.2026**
(21) Application number: 25167078.2
(22) Date of filing: 28.03.2025
(51) Int. Cl.: E02B 3/04, E02D 5/02, A01K 61/70, B28B 1/00, B33Y 80/00, C04B 2/00

(54) **UNDERWATER SHEET PILE ASSEMBLY WITH ATTACHED ADDITIVE MANUFACTURING STRUCTURE FOR FORMING AN ARTIFICIAL REEF, ADDITIVE MANUFACTURING STRUCTURE FOR ATTACHMENT TO UNDERWATER SHEET PILE, AND METHOD OF ATTACHMENT**
UNTERWASSER-SPUNDWANDANORDNUNG MIT BEFESTIGTER ADDITIVHERSTELLUNGSSTRUKTUR ZUR HERSTELLUNG EINES KÜNSTLICHEN RIFFS, ADDITIVHERSTELLUNGSSTRUKTUR ZUR BEFESTIGUNG AN DER UNTERWASSER-SPUNDWAND UND BEFESTIGUNGSVERFAHREN
ENSEMBLE DE PALPLANCHES SOUS-MARINES AVEC STRUCTURE DE FABRICATION ADDITIVE FIXÉE POUR FORMER UN RÉCIF ARTIFICIEL, STRUCTURE DE FABRICATION ADDITIVE POUR FIXATION À LA PALPLANCHE SOUS-MARINE

(30) Priority: 04.04.2024 EP 24168415
(43) Date of publication of application: 05.11.2025
(73) Proprietor: Stonereefs A/S, 7330 Brande (DK)
(72) Inventor: Dam, Mikkel Brich, 7330 Brande (DK)
(74) Representative: Nordic Patent Service A/S

(56) References cited:
- GB-A- 2 609 268
- KR-B1- 102 016 558
- US-A1- 2022 372 721

## Description

### FIELD OF THE INVENTION

The present invention relates to underwater structures and marine engineering, specifically to an assembly of an underwater sheet pile and an attached structure for forming an artificial reef for ecological enhancement and hydrodynamic optimization. The invention further relates to structures designed for attachment to underwater sheet piles, manufactured using additive manufacturing techniques and composed at least partially of stone materials such as concrete, clay, or cement. Additionally, the invention concerns a method for attaching such structures to underwater sheet piles, utilizing attachment means. The invention is applicable in coastal protection, erosion control, marine habitat restoration, and artificial reef construction, particularly for improving biodiversity, sediment retention, and structural reinforcement of underwater barriers.

### BACKGROUND

The aquatic biodiversity is decreasing in the waters of the entire world, and in some underwater areas, the biodiversity is more or less extinct and died out due to destructive pollution, such as humanmade pollution, and negligence of the vital aquatic life.

The diversity of aquatic life is extremely important for the life underwater as well as the life over the water surface, so the world calls for optimized solutions within the marine biodiversity if an acceptable and necessary biodiversity should be obtained and/or restored in the aquatic area.

Therefore, a sustainable, biodiversity-improving improving and easily manufacturable solution is a necessity and is highly desired.

Thus, there is a need to counteract the negative consequences (loss of habitat) that occur when establishing maritime infrastructure projects, such as harbors, bridges, tunnels, offshore wind, etc.

Today, some biodiversity improving solutions are known and available, however, the effect and the accessibility of the solutions are not optimal relative to the high demand and immediate need.

US20220372721A1 discloses portable and interchangeable marine tiles and marine pods for containing and growing marine organisms, such as coral. The marine tiles typically have a first face with a 3D pattern and a second face and may contain sites for supporting marine organisms. The tiles can be attached to artificial supporting substrates like bridge piles or jetty piles, either individually or in clustered patterns. The marine pods are dismountable and transportable units designed to quickly create underwater substrates for growing marine organisms. The pods have a first panel with a first slit and a second panel with a second slit that can interlock by sliding the slits together.

Hence, an improved underwater biodiversity solution, preferably an efficient and reliable solution, would be advantageous, and in particular, a more resistant, economical, sustainable solution with longevity would be advantageous.

### SUMMARY

An object of the present invention is to provide a solution, such as a structure and method, that solves the above-mentioned problems by providing a solution for improving underwater diversity.

According to a first aspect, there is provided a structure for attaching to at least one underwater sheet pile for forming an artificial reef, the structure comprising:
one or more attachments means,
at least a portion of the structure is made of a stone material, such as concrete, clay and/or cement,
at least a portion of the structure being additive manufactured,
said portion made of a stone material, such as concrete, clay and/or cement, forms the artificial reef, and
wherein the structure with its one or more attachment means is shaped and sized to conform to and be arranged within an indentation of the at least one underwater sheet pile or in an indentation formed by a row of interlocking underwater sheet piles, the indentation having an at least substantially trapezial contour, and the structure with its attachment means is shaped and sized such that the outer surface geometry of the structure with its attachment means corresponds at least substantially to the contour of the indentation, thereby enabling a complementary fit along at least a portion of the length and depth of the indentation.

The invention is particularly, but not exclusively, advantageous for providing a structure for increasing, improving, establishing and/or reestablishing the biodiversity underwater in the marine area.

The structure provides a solution to create an optimal 3D printed artificial reef, such as a stone reef, wherein all kinds of different aquatic cultures of life can be protected and evolve. Moreover, the structure of the invention provides ideal habitats for marine organisms as well as animals.

Furthermore, the invention provides a structure being easily manufacturable, since the structure is preferred manufactured by additive manufacturing / 3D printing.

Additionally, the structure is efficient, reliable and resistant in the underwater area.

Also, the structure is both economical and highly sustainable with longevity.

The structure is possible and suitable to be manufactured in any desired stone material.

In the context of the present invention, "stone material" may be understood as any material made of stone or partly stone, and material possible for being additive manufactured. Stone material may be concrete, cement, clay, or the like.

The invention furthermore has the potential of being made in biomaterial such that the stone material is either combined with biomaterial or oven fully replaced by biomaterial.

The biomaterial is preferably also additive manufactured.

In the context of the present invention, "additive manufacturing" may be understood as 3D printing or the like.

In the context of the present invention, "indentation" may be understood as a notch, groove, recess, or any longitudinally extending hollow areas formed by one or more sheet piles or the like.

In the context of the present invention, "marine" or "underwater" or "aquatic" may be understood as any water related area such as the ocean, sea, rivers, flood, tide, lake, streams, channels or the like.

The water may be salt water, fresh water or any other type of water.

In the context of the present invention, "culture" may be understood as any underwater animal, organism or plant culture, preferably the culture helps to increase the underwater biodiversity.

In the context of the present invention, "arrange" may be understood as mount, position, fixate, attach or the like.

In a possible implementation form of the first aspect, the structure, together with the attachment means, is shaped and sized to fit in the indentation with a water passageway formed between the structure and the deepest portion of the indentation.

In a possible implementation form of the first aspect, the indentation is formed between a bottom web of a row of sheet piles, a first side web of the row of sheet piles, the first side web extending obliquely or perpendicularly from a first edge of the bottom web, and a second side web of the row of sheet piles the second side web extending obliquely or perpendicularly from a second edge of the bottom web that is opposite to the first edge, wherein the attachment means connect a first lateral side of the structure to the first side web and the second lateral side to the second side web with a water passageway between the bottom web and the structure, or the attachment means connect the bottom web with the structure, preferably with a water passageway between the bottom web and the structure.

In a possible implementation form of the first aspect, the attachment means comprises at least one metal mounting bracket configured for welding to the at least one underwater sheet pile.

In a possible implementation form of the first aspect, the structure has a length and a cross-section varying throughout the length of the structure.

In a possible implementation form of the first aspect, the structure is adapted for being attached directly or indirectly to the at least one underwater sheet pile with at least one bracket and/or at least one magnet.

In a possible implementation form of the first aspect, the mounting bracket is adapted for being releasably attached to the structure, and/or the mounting bracket is adapted for being releasably attached to the sheet pile(s).

In a possible implementation form of the first aspect, the mounting bracket provides: a push force against at a lower attachment point, and a pull force from an upper attachment point.

In a possible implementation form of the first aspect, the structure is inoculated and/or at least partly coated with algae and/or any other marine organism.

In a possible implementation form of the first aspect, the structure comprises one or more interconnected wave-like segments, each segment defining an alternating sequence of convex and concave surfaces, wherein adjacent segments are integrally connected along their longitudinal edges to form a continuous, undulating profile, preferably the structure includes internal channels extending along the length of each segment, configured to facilitate water flow, sediment accumulation, and marine life habitation.

In a possible implementation form of the first aspect, the structure comprises a series of curved, overlapping segments arranged in a stacked configuration, each segment defining a concave and convex profile, forming an undulating, stepped structure, wherein the segments are preferably positioned at an angular offset relative to each other, creating internal passageways and cavities that facilitate water flow, sediment deposition, and marine life habitation.

The wave-like segments create a hydrodynamically optimized artificial reef shape.

The interconnected design ensures structural integrity and a modular configuration.

The internal passageways allow for water circulation, marine life shelter, and sediment flow.

The curved surface encourages turbulence, biodiversity settlement, and nutrient mixing.

The structure is designed to resist underwater forces while fostering marine ecosystems.

The arrangement of the curved segments promotes turbulence, nutrient circulation, and colonization by marine organisms, while the stepped design provides shelter and anchoring surfaces for coral growth. The structure is formed from a durable, eco-friendly material suitable for long-term submersion in marine environments, ensuring stability and ecological integration.

Stone or concrete is an eco-friendly material suitable to withstand underwater conditions and encourage coral growth and biodiversity.

According to a second aspect, there is provided a method for attaching a structure to one or more underwater sheet piles, the structure being the structure according to the first aspect, wherein the method comprises:
providing an additive manufactured structure,
providing at least one mounting bracket,
attaching the structure to the mounting bracket,
positioning the mounting bracket in an indentation of:
   one sheet pile and/or
   a plurality of interconnected sheet piles, preferably a row of interconnected sheet piles, and
optionally inoculating and/or coating at least partly the structure with algae and/or any other marine organism.

In a possible implementation form of the second aspect, the indentation is formed by webs of the one sheet pile and/or a plurality of interconnected sheet piles, and the method comprises attaching the at least one mounting bracket to one or more of the webs.

The steps of the method can be executed in any order and/or executed simultaneously.

The second aspect of the invention is particularly, but not exclusively, advantageous for providing an optimal, easy, effective, and reliable attachment of a biodiversity improving underwater structure.

In the context of the present invention, "attach" may be understood as mount, position, fixate, arrange or the like.

In one embodiment of the invention, the method further comprises the step of:
inoculating and/or coating at least partly the structure with algae and/or any other marine organism.

The embodiment is particularly, but not exclusively, advantageous for optimizing the potential of increasing and improving the underwater biodiversity.

Embodiments from the system/product should be seen as applicable to the method, and embodiments from the method should be seen as applicable for the product/system.

According to a third aspect, there is provided an assembly of at least one underwater sheet pile and a structure according to the first aspect attached to the at least one underwater sheet pile for forming an artificial reef.

Disclosed is a structure for attachment to associated underwater sheet pile(s), said structure comprising:
- one or more attachments means, preferably one or more magnets,
- at least a portion made in a stone material, such as concrete, clay and/or cement, preferably the entire structure is made of stone material,
- at least a portion being additive manufactured, preferably the entire structure is additive manufactured, and
wherein said structure is adapted to be arranged in the indentation of said underwater sheet pile or in the indentation of array-connected underwater sheet piles.

Disclosed is a method for attaching a structure to a sheet pile, preferably said structure being a structure according to the first aspect of the invention, wherein said method comprises the steps of:
- providing an additive manufactured structure,
- providing a mounting bracket comprising at least one magnet,
- releasably attaching the mounting bracket by magnetic force to the one or more sheet piles by positioning said mounting bracket in an indentation of:
   - one sheet pile and/or
   - a plurality of connected sheet piles, preferably arrow connected,
- attaching the structure to the mounting bracket,
wherein the steps of the method can be executed in any order and/or executed simultaneously.

The first, second and third aspect of the present invention may each be combined with any of the other aspects. These and other aspects of the invention will be apparent from and elucidated with reference to the embodiments described hereinafter.

### SHORT DESCRIPTION OF THE DRAWINGS

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples, even if not so illustrated or if not so explicitly described.

Exemplary embodiments of the invention are described in the figures, wherein:
Figure 1 illustrates examples of a plurality of structures arranged on sheet piles.
Figure 2 illustrates a cross-section of a structure arranged on a sheet pile.
Figure 3 illustrates a cross-section of an angled mounting bracket.
Figure 4 illustrates a structure suitable for organisms.
Figures 5a, 5b, 6a,6b, 7a, 7b, 8a, 8b, 9a, 9b, 10a, 10b, 11a, 11b, 12a and 12b illustrate plurality of examples of specific embodiments of structures,
Figure 13a illustrates a front view of an embodiment of a sheet pile wall provided with structures.
Figure 13b illustrates a front view with details of a section of the sheet pile wall of Figure 13a.
Figure 13c is a top view of the sheet pile wall section and structure of Figure 13b.
Figure 14a is a variation of the embodiment of Fig 13b.
Figure 14b is a variation of the embodiment of Fig 13c.

### DETAILED DESCRIPTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the Figures, to explain aspects of the invention in detail.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

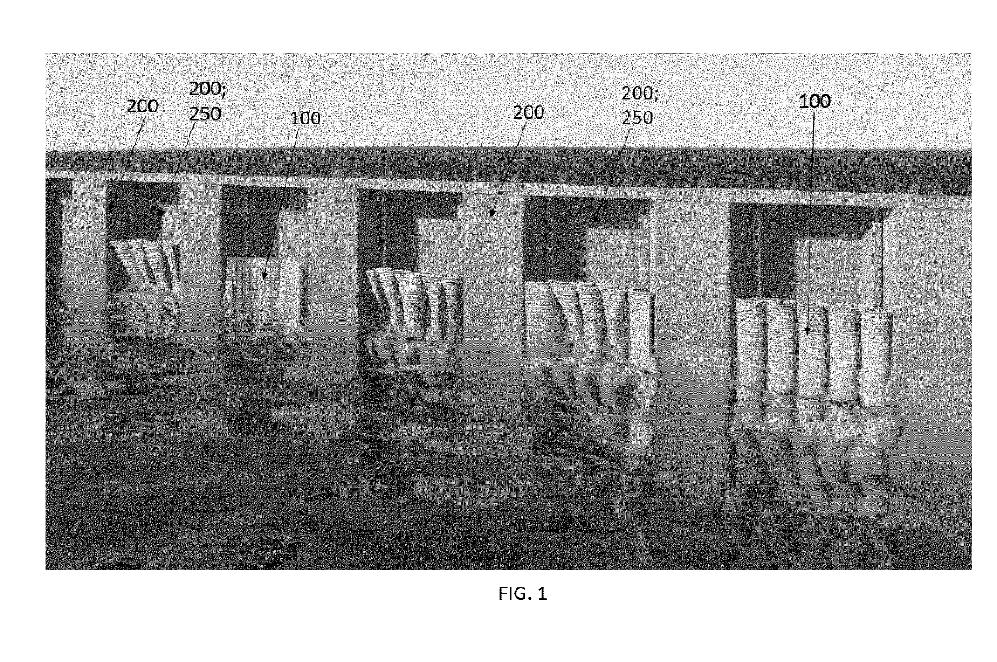

FIG. 1 illustrates examples of a plurality of structures 100 arranged on a continuous sheet pile wall formed by a row of interlocking sheet piles 200. The sheet piles 200 are according to the specifications of the European standard EN 10248, which covers hot-rolled steel sheet piles, including U-shaped and Z-shaped profiles, or EN 10249, which covers cold-formed steel sheet piles. The sheet piles can be U-shaped (as shown) or Z-shaped.

The structures 100 are shown to have various shapes and sizes, all designed to fit substantially into the longitudinally extending indentations 250 of the sheet piles 200. This arrangement demonstrates the versatility of the invention in accommodating different structural designs while maintaining a secure fit within the sheet pile system. The structures 100 are depicted at various water levels, with some fully submerged and others partially exposed, illustrating the adaptability of the system to different water depths and tidal conditions.

As illustrated, the structure 100 can take an endless range of different forms and shapes, with different proportions and dimensions made to fit at least substantially into the indentation 250 of a sheet pile 250 or a row of interlocking sheet piles 250.

The structure 100 with its one or more attachment means is shaped and sized to conform to and be arranged within the indentation 250 of the underwater sheet pile 200 or in an indentation 250 formed by a row of interlocking underwater sheet piles 200.

Preferably, the structure 100, with its attachment means, is shaped and sized to fit in the indentation 250 with a water passageway 600 formed between the structure 100 and the deepest portion of the indentation,

The structure 100 with its attachment means is shaped and sized such that the outer surface geometry of the structure 100 with its attachment means corresponds at least substantially to the contour of the indentation 250, thereby enabling a complementary fit along at least a portion of the length and depth of the indentation 250.

This flexibility in design allows for customization to specific environmental needs or ecological goals.

The structures 100 may be completely covered by water or partly covered as illustrated in FIG. 1, demonstrating their suitability for various water depths and tidal zones.

The structure 100 as illustrated in FIG. 1is adapted for being attached directly or indirectly to the sheet pile 200 by attachment means. The attachment means may comprise a bracket 500, which can be made of metal, preferably a weldable metal. This allows for secure and durable attachment of the structures to the sheet piles.

The attachment means may also include at least one magnet 300, preferably two or more magnets 300. While the specific attachment is not illustrated in FIG. 1, this magnetic attachment system provides a non-invasive and easily adjustable method for securing the structures to the sheet piles.

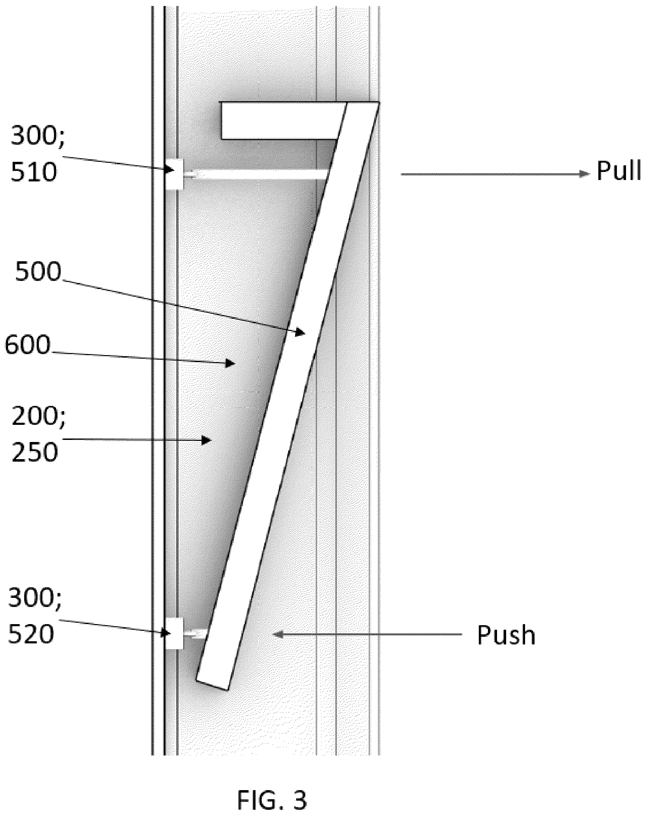

An indirect attachment via a mounting bracket 500 is illustrated in FIG. 3, which will be described in more detail later.

Within the invention, it is preferred that the attachment of one or more structures 100 to a sheet pile 200 is performed with a method comprising:
- providing an additive manufactured structure 100,
- providing at least one mounting bracket 500,
- attaching the structure 100 to the mounting bracket 500,
- positioning the mounting bracket in an indentation 250 of:
   one sheet pile 200 and/or
   a plurality of interconnected sheet piles 200, preferably a row of interconnected sheet piles 200, and
- optionally inoculating and/or coating at least partly the structure (100) with algae and/or any other marine organism.

The indentation is in an embodiment formed by webs 210,220,230 of the one sheet pile 200 and/or a plurality of interconnected sheet piles 200, and the method comprises comprising attaching the at least one mounting bracket 500 to one or more of the webs 210,220,230.

The steps of the method can be executed in any order and/or executed simultaneously, providing flexibility in the installation process.

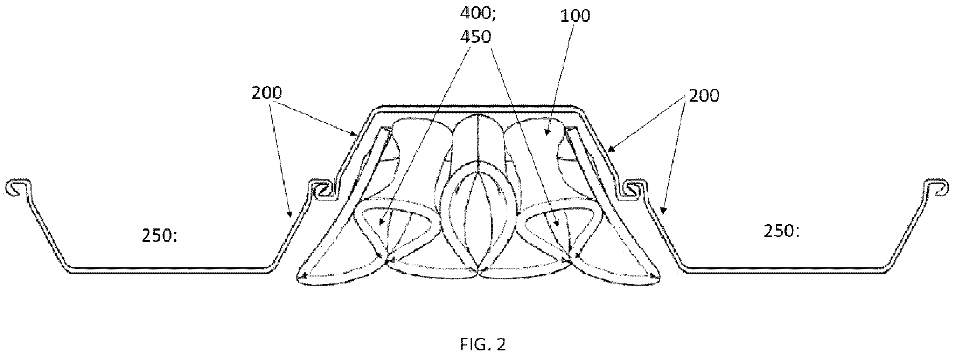

FIG. 2 illustrates a cross-section of a structure 100 arranged in an indentation 250 of an array of sheet piles 200 using attachment means. This figure provides a detailed view of how the structure fits within the sheet pile system and its internal design.

The structure 100 within the invention is intended for attachment to associated underwater sheet pile(s) 200, the structure comprising:
- one or more attachments means 300 (not shown in FIG. 2 - see FIG. 3), preferably one or more magnets 300, which provide a secure yet non-invasive attachment method,
- at least a portion made of stone material, such as concrete, clay, and/or cement, preferably the entire structure is made of stone material. This material choice ensures durability in underwater environments and provides a suitable substrate for marine life.
- at least a portion being additive manufactured, preferably the entire structure is additive manufactured, allowing for complex geometries that enhance ecological benefits.

The structure 100, together with its attachments means, is shaped and sized to fit in the indentation 250 of the underwater sheet pile 200 or in an indentation 250 formed by a row of interlocking underwater sheet piles (200), i.e. the structure with it attachment means is adapted to be arranged in the indentation 250 of the underwater sheet pile 200 or in the indentation 250 of array-connected underwater sheet piles 200, ensuring a secure fit and integration with existing infrastructure. As shown in FIG. 2, the structure 100 together with the attachment means is shaped and seized to fit in the indentation 250 with a water passageway 600 formed between the structure 100 and the deepest portion of the indentation 250. This water passageway 600 facilitates water flow and creates additional habitat space for marine organisms.

In many embodiments, the indentation 250 is formed between a bottom web 230 of a row of sheet piles 200, a first side web 210 of the row of sheet piles 200, the first side web 210 extending obliquely or perpendicularly from a first edge of the bottom web 230, and a second side web 220 of the row of sheet piles 200, the second side web 220 extending obliquely or perpendicularly from a second edge of the bottom web 230 that is opposite to the first edge. In such configurations, the attachment means connect a first lateral side of the structure 100 to the first side web 210 and the second lateral side to the second side web 220 with a water passageway 600 between the bottom web 230 and the structure 100. This arrangement maximizes the ecological benefits while ensuring secure attachment.

Throughout the figures, the structure is illustrated as being made fully of concrete and being fully 3D printed / additive manufactured. This demonstrates the potential for creating complex, customized structures using advanced manufacturing techniques.

However, it should be understood that within the invention, the entire structure does not necessarily have to be fully made of stone material or fully 3D printed. This allows for flexibility in material composition and manufacturing methods to suit specific needs or environmental conditions.

However, it is preferred that the greater part of the structure is made of stone material and, more preferably, that the entire structure is made of stone material, such as concrete. This preference is based on the durability and suitability of stone materials in marine environments.

An example of a structure not being fully made of stone material could be a structure made of approx. 90% stone material combined with a part of approx. 10% biomaterial or any other desired material. This combination could enhance certain ecological properties of the structure.

Or approx. 80% stone material and approx. 20% biomaterial or alternative material.

Or approx. 70% stone material and approx. 30% biomaterial or alternative material.

Or approx. 60% stone material and approx. 40% biomaterial or alternative material.

Or approx. 50% stone material and approx. 50% biomaterial or alternative material. These various ratios demonstrate the flexibility in material composition to achieve specific ecological or structural goals.

The stone material can comprise concrete but does not contain Portland cement but may comprise Geopolymer Cement (made from fly ash, slag, and alkaline activators) or Limestone Calcined Clay Cement (LC3) (clay and limestone to reduce the clinker content and lower carbon footprint).

Moreover, it is preferred that the greater part be 3D printed and, more preferably, the entire structure is 3D printed. This preference for additive manufacturing allows for the creation of complex geometries that can enhance ecological benefits and structural performance. Moreover, it is preferred that the structure 100 is an integrally 3D-printed body", i.e., printed in one go without separate parts, and is formed by a single-piece 3D-printed structure, i.e., it consists of only one piece. Thus, the structure 100 can be additively manufactured as a single entity, i.e., printed as one continuous object.

In an embodiment, the material that the structure is made of comprises a commercially available bioactive composite, the material displays active recruitment of microalgae. The structure 100 may be inoculated and/or at least partly coated with algae and/or any other marine organism to accelerate the ecological colonization process.

The top of the structure 100 can be clad with seashells, preferably shells of the blue mussel (Mytilus edulis) that are sourced from the food industry. This creates a more complex surface structure, and releases signal molecules that attract new colonies of blue mussels.

Furthermore, the structure 100 has an at least substantially quadrangular cross-section, and in FIG. 2 the preferred cross-section of the structure is illustrated as an at least substantially trapezial cross-section. This shape allows for optimal fitting within the indentation of the sheet pile while providing a stable base and varied surfaces for marine life.

It should be understood that within the invention, the shape of the structure would rarely be made in straight lines, so when defining a quadrangular cross-section and/or a trapezial cross-section, it should be seen as an overall shape and not as a perfect quadrangular or trapezial cross-section shape. This allows for organic, nature-inspired designs that can enhance ecological benefits.

Moreover, in FIG. 2 is illustrated a structure 100 having a cross-section comprising a plurality of cavities or channels 400. The cavities or channels 400 are open-ended 450 at least in the top 210 and/or the bottom of the structure 220 to allow for water circulation, marine life shelter, and sediment flow. These cavities and openings play a crucial role in enhancing the ecological value of the structure by providing diverse habitats and promoting water movement.

Also, the structure illustrated in FIG. 2 has a cross-section varying throughout the length of the structure 100. This variation in cross-section allows for diverse surface textures and habitats along the length of the structure, enhancing its ecological value.

FIG. 3 illustrates a cross-section of an angled mounting bracket 500. This figure provides detailed insight into the attachment mechanism of the structure to the sheet pile.

It should be understood that the shape and dimension of the mounting bracket 500 should not be seen as a limitation of the invention. The bracket can be customized to suit different structure designs and sheet pile configurations.

Furthermore, it should be understood that the angled mounting bracket 500 is one embodiment of a bracket; however, within the invention, the mounting bracket 500 can be angled, such that a structure is arranged angled in an indentation 250 of one or more sheet pile(s) 200, or the mounting bracket 500 can be non-angled, such that a structure 100 is arranged at least substantially vertical in an indentation 250 of one or more sheet pile(s) 200. This flexibility in bracket design allows for optimal positioning of the structure relative to water flow and light exposure.

Also, it should be understood that within the invention, it is preferred to mount/position/arrange/fixate/attach the structure 100 to the one or more sheet piles 200 via a mounting bracket 500: however, it is also possible to attach the structure 100 directly on the one or more sheet piles 200 with attachments means 300, such as magnets 300. This versatility in attachment methods allows for adaptation to different installation scenarios and environmental conditions.

The preferred attachment means within the invention is magnets; however, it should be understood that other attachment means 300 may also be used. Magnetic attachment provides a non-invasive, easily adjustable method of securing the structures.

In FIG. 3 the mounting bracket 500 is adapted for being releasably attached to the structure 100, and/or the mounting bracket 500 is adapted for being releasably attached to the sheet pile(s) 200, as the mounting bracket 500 of the invention comprises at least one magnet 300, preferably two or more magnets, adapted for attaching the mounting bracket 500 to the sheet pile 200. In FIG. 3 the mounting bracket 500 is illustrated with two magnets 300 for attaching the bracket 500 to the sheet pile 200. This releasable attachment system allows for easy installation, removal, and repositioning of structures as needed.

As illustrated with arrows in FIG. 3, the mounting bracket 500 is in one embodiment of the invention arranged to provide a push force against at a lower attachment point 520 and a pull force from an upper attachment point 510. This arrangement ensures a secure attachment that can withstand various underwater forces.

In FIG. 3, the structure 100 is mounted on sheet pile(s) 200 provides a rear cavity 600 behind the structure between the mounting bracket 500 and the sheet pile(s) 200. This rear cavity can serve as additional habitat space for marine life and contribute to water circulation patterns around the structure.

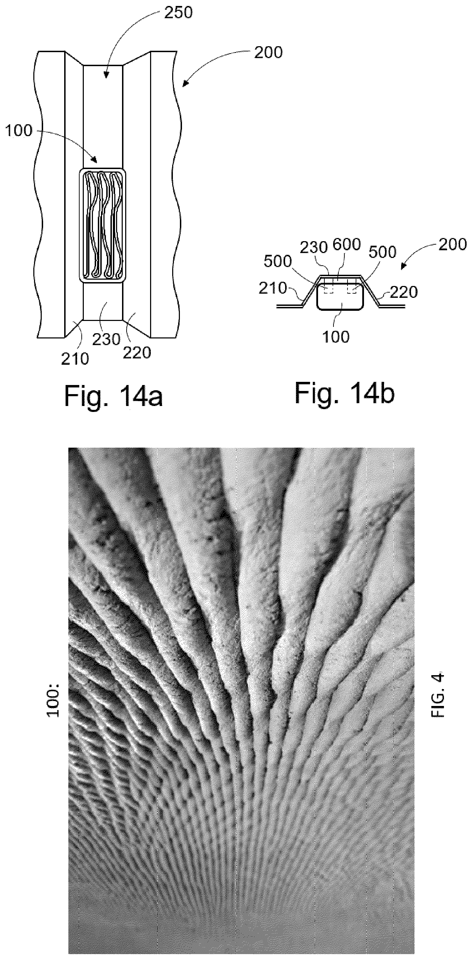

FIG. 4 illustrates a structure 100 suitable for organisms. This figure showcases a specific design aimed at maximizing ecological benefits.

The structure 100 illustrated is especially ideal for being a habitat for aquatic organisms since the texture of the structure 100 has a high surface complexity to recruit algae, vascular plants, and other organisms. The intricate surface design provides numerous attachment points and microhabitats for various marine species.

3D printed concrete is unique for this purpose since it already has a rough texture and further has an undulating layering. This manufacturing method allows for the creation of complex surface textures that mimic natural reef structures.

The structure 100 illustrated is especially ideal for being a habitat for aquatic animals since the design is made to have a high structural complexity for, e.g., fish and other animals. The structure includes various cavities, overhangs, and passages that can serve as shelter or breeding areas for different species.

The structure 100 is configured to double as shaped and sized to fit within the sheet pile indentation while providing maximum ecological benefit.

It is an advantage to benefit from the properties of the 3D printed structures to make varied cavities and surfaces along the entire structure. This manufacturing method allows for the creation of complex, nature-inspired designs that would be difficult or impossible to achieve with traditional manufacturing methods.

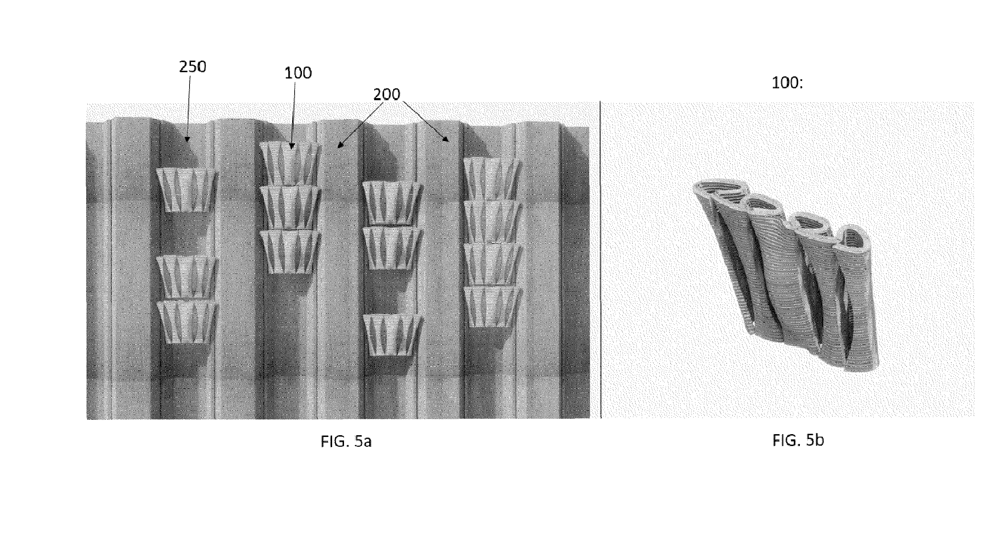

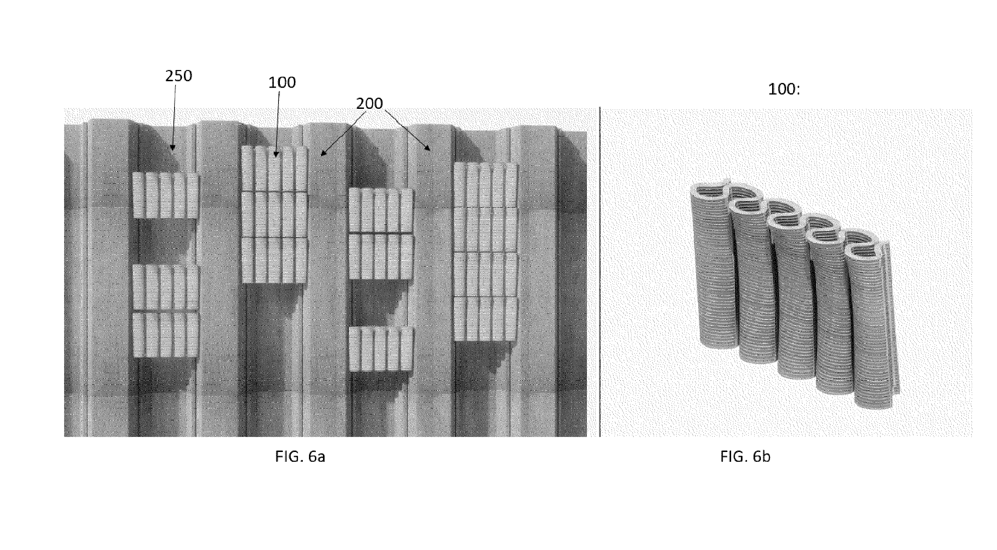

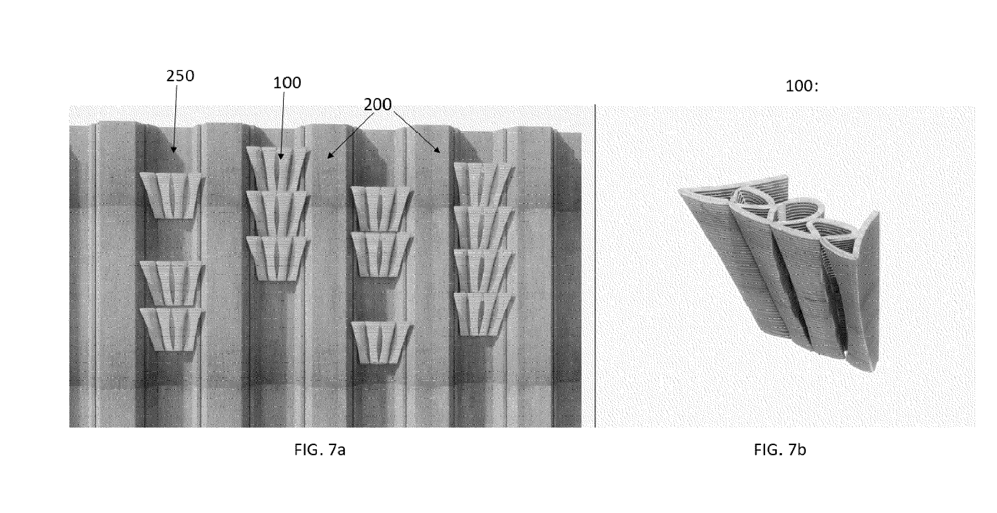

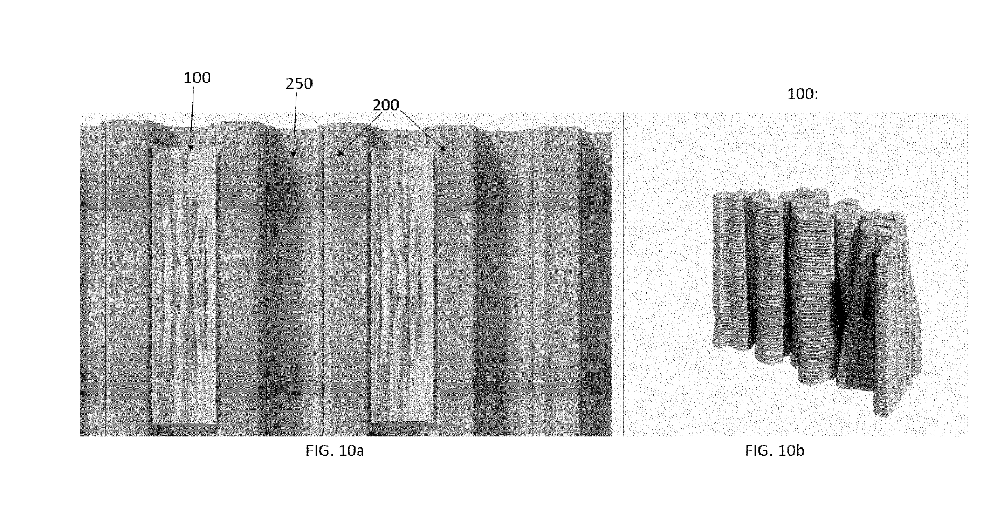

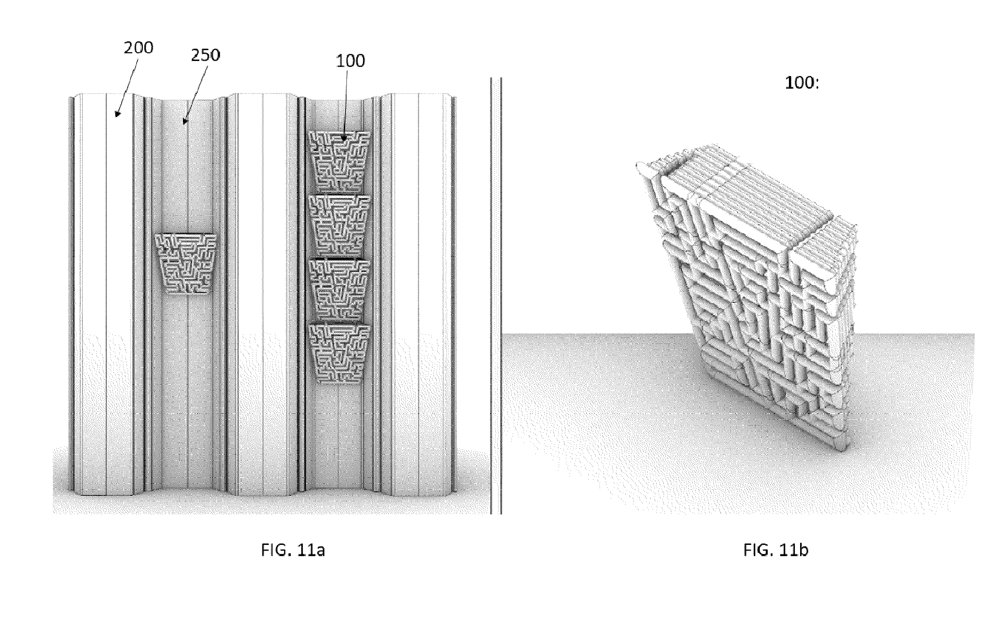

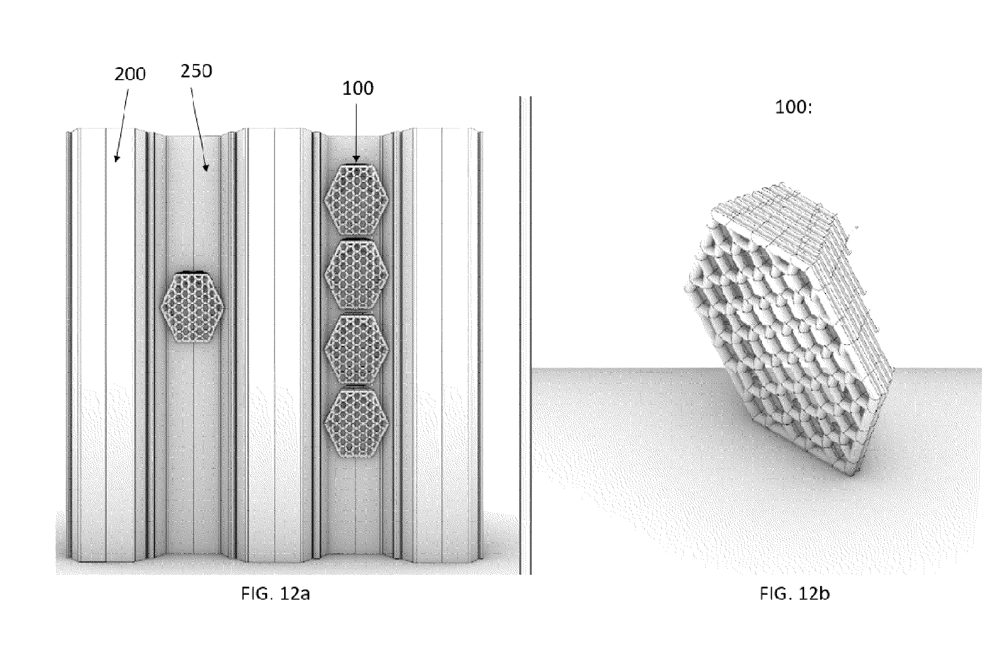

FIG. 5 to 12 illustrate a plurality of examples of specific embodiments of structures. These figures showcase the versatility of the invention in creating diverse structural designs to suit various ecological needs and environmental conditions.

FIG. 5b, 6b, 7b, 8b, 9b, 10b, 11b, and 12b illustrate examples of structures in a 3D perspective not attached to one or more sheet piles 200. These views provide detailed insights into the complex geometries and surface features of each structure design.

FIG. 5a, 6a, 7a, 8a, 9a, 10a, 11a, and 12a illustrate examples of structures 100 in a front view perspective, wherein a plurality of structures is attached to one or more sheet piles 200 for creating an artificial reef. These views demonstrate how multiple structures can be arranged along sheet piles to create a comprehensive artificial reef system. The varied designs and arrangements shown in these figures illustrate the potential for creating diverse underwater habitats and enhancing marine biodiversity.

Several of the figures, particularly FIG. 5 through FIG. 9, illustrate structures 100 comprising one or more interconnected wave-like segments, each segment defining an alternating sequence of convex and concave surfaces. Adjacent segments are integrally connected along their longitudinal edges to form a continuous, undulating profile. The structures 100 include internal cavities or channels 400 extending along the length of each segment, configured to facilitate water flow, sediment accumulation, and marine life habitation. This wave-like design creates a hydrodynamically optimized artificial reef shape that promotes turbulence, biodiversity settlement, and nutrient mixing.

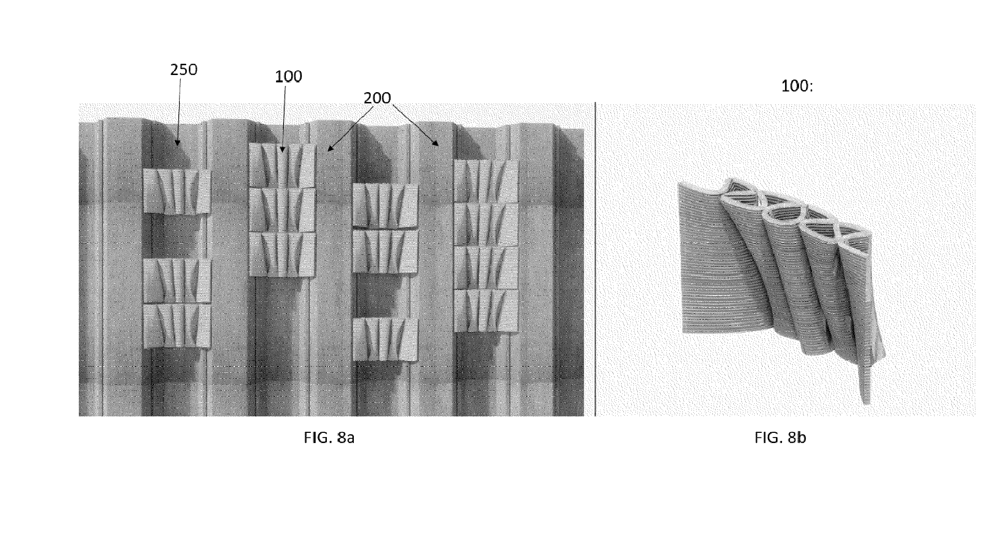

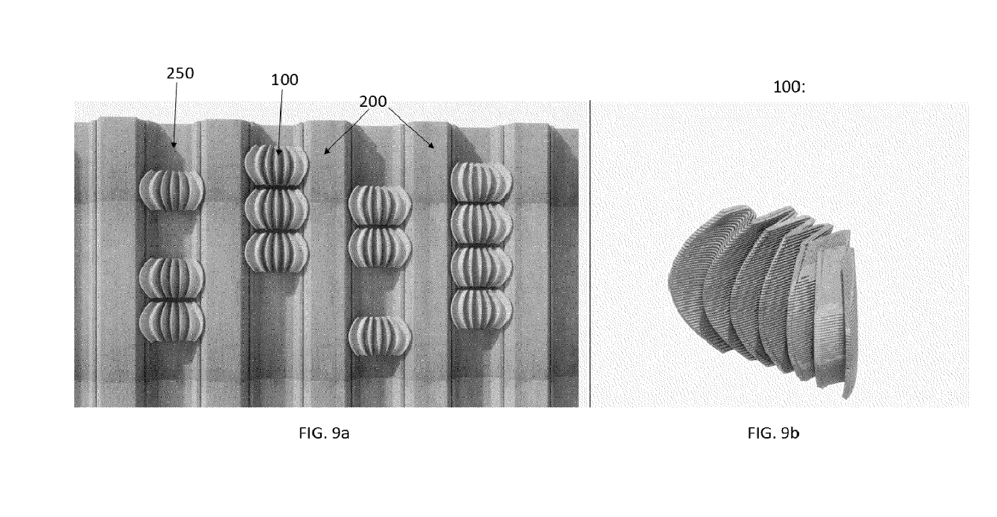

In other embodiments, particularly visible in FIG. 8 and FIG. 9, the structure 100 comprises a series of curved, overlapping segments arranged in a stacked configuration, each segment defining a concave and convex profile, forming an undulating, stepped structure. The segments are positioned at an angular offset relative to each other, creating internal passageways and cavities that facilitate water flow, sediment deposition, and marine life habitation. This arrangement promotes turbulence, nutrient circulation, and colonization by marine organisms, while the stepped design provides shelter and anchoring surfaces for coral growth.

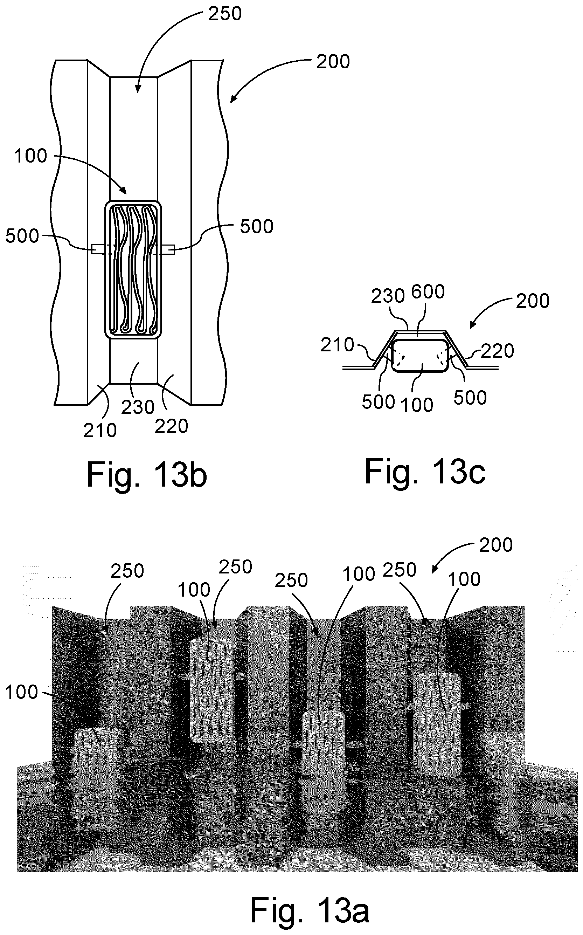

Fig. 13a illustrates a front view of an embodiment of a sheet pile wall provided with multiple structures 100. Fig. 13b shows a detailed front view of a section of the sheet pile wall from Fig. 13a, while Fig. 13c presents a top view of the sheet pile wall section and structure from Fig. 13b. These figures demonstrate how the assembly of underwater sheet piles 200 and attached structures 100 forms a comprehensive artificial reef system that enhances marine biodiversity while providing structural reinforcement to the sheet pile wall. The indentation (250) in the sheet pile is formed between a bottom web 230 of a row of sheet piles 200, a first side web 210 of the row of sheet piles 200, the first side web 210 extending obliquely or perpendicularly from a first edge of the bottom web 230, and a second side web 220 of the row of sheet piles 200 the second side web 220 extending obliquely or perpendicularly from a second edge of the bottom web 230 that is opposite to the first edge 210. The attachment means, such as a bracket 500 connecting a first lateral side of the structure 100 to the first side web 210 and the second lateral side 220 to the second side web 210 with a water passageway 600 between the bottom web 230 and the structure 100. One end of each of the two mounting brackets 500 is inserted in respective recesses in the first and second lateral sides of the structure 100. The recess is preferably formed during the additive manufacturing process of the structure 100. Thereupon, the structure with the brackets is placed in the indentation, and the other end of the two mounting brackets 500 is welded to the respective first and second side webs 210, 220.

Figure 14a shows a detailed front view of a section of the sheet pile wall that is a variation of the embodiment of Figure 13a, while Figure 14b presents a top view of this sheet pile wall section and structure. In this embodiment the attachment means (mounting bracket 500 or mounting brackets 500) connect the bottom web 230 with the structure 100. Hereto, one end of the respective bracket 500 is welded to the bottom web 230 with the other end of the bracket 500 inserted in a recess in the structure 100.

In embodiments, the structure 100 may comprise one or more interconnected wave-like segments, each segment defining an alternating sequence of convex and concave surfaces, wherein adjacent segments are integrally connected along their longitudinal edges to form a continuous, undulating profile. Preferably the structure 100 includes internal channels 400 extending along the length of each segment, configured to facilitate water flow, sediment accumulation, and marine life habitation.

In other embodiments the structure 100 comprises a series of curved, overlapping segments arranged in a stacked configuration, each segment defining a concave and convex profile, forming an undulating, stepped structure. The segments are preferably positioned at an angular offset relative to each other, creating internal passageways and cavities that facilitate water flow, sediment deposition, and marine life habitation.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims may possibly be advantageously combined, and the mentioning of these features in different claims does not exclude that a combination of features is possible and advantageous.

## Claims

1. A structure (100) for attaching to at least one underwater sheet pile (200) for forming an artificial reef, the structure (100) comprising:
one or more attachments means,
at least a portion of the structure (100) is made of a stone material, such as concrete, clay and/or cement, and
at least a portion of the structure (100) being additive manufactured,
**characterized in that**
said portion made of a stone material, such as concrete, clay and/or cement, forms the artificial reef,
the structure (100) with its one or more attachment means is shaped and sized to conform to and be arranged within an indentation (250) of the at least one underwater sheet pile (200) or in an indentation (250) formed by a row of interlocking underwater sheet piles (200), the indentation having an at least substantially trapezial contour, and the structure (100) with its attachment means is shaped and sized such that the outer surface geometry of the structure (100) with its attachment means corresponds at least substantially to the contour of the indentation (250), thereby enabling a complementary fit along at least a portion of the length and depth of the indentation (250).

2. The structure (100) of claim 1, wherein the structure (100), with its attachment means, is shaped and sized to fit in the indentation (250) with a water passageway (600) formed between the structure (100) and the deepest portion of the indentation.

3. The structure (100) of claim 1 or 2, wherein the indentation (250) is formed between a bottom web (230) of a row of sheet piles (200), a first side web (210) of the row of sheet piles (200), the first side web (210) extending obliquely or perpendicularly from a first edge of the bottom web (230), and a second side web (220) of the row of sheet piles (200) the second side web (220) extending obliquely or perpendicularly from a second edge of the bottom web (230) that is opposite to the first edge (210), wherein the attachment means connect a first lateral side of the structure (100) to the first side web (210) and the second lateral side (220) to the second side web (210) with a water passageway (600) between the bottom web (230) and the structure (100) or the attachment means connect the bottom web (230) to the structure (100), preferably with a water passageway (600) between the bottom web (230) and the structure (100).

4. The structure (100) of any one of claims 1 to 3, wherein the attachment means comprises at least one metal mounting bracket (500) configured for welding to the at least one underwater sheet pile (200).

5. The structure (100) of any one of claims 1 to 4, wherein the structure (100) comprises one or more interconnected wave-like segments, each segment defining an alternating sequence of convex and concave surfaces, wherein adjacent segments are integrally connected along their longitudinal edges to form a continuous, undulating profile, preferably the structure (100) includes internal channels (400) extending along the length of each segment, configured to facilitate water flow, sediment accumulation, and marine life habitation.

6. The structure (100) of any one of claims 1 to 5, wherein the structure (100) comprises a series of curved, overlapping segments arranged in a stacked configuration, each segment defining a concave and convex profile, forming an undulating, stepped structure, wherein the segments are preferably positioned at an angular offset relative to each other, creating internal passageways and cavities that facilitate water flow, sediment deposition, and marine life habitation.

7. A method for attaching a structure (100) to one or more underwater sheet piles (200), the structure (100) being the structure (100) according to any one of claims 1 to 6, wherein the method comprises:
providing an additive manufactured structure (100),
providing at least one mounting bracket (500),
attaching the structure (100) to the mounting bracket (500),
positioning the mounting bracket in an indentation (250) of:
one sheet pile (200) and/or
a plurality of interconnected sheet piles (200), preferably a row of interconnected sheet piles (200),
and
optionally inoculating and/or coating at least partly the structure (100) with algae and/or any other marine organism.

8. The method of claim 7, wherein the indentation is formed by webs (210,220,230) of the one sheet pile (200) and/or a plurality of interconnected sheet piles (200), and the method comprises comprising attaching the at least one mounting bracket (500) to one or more of the webs (210,220,230).

9. An assembly of at least one underwater sheet pile (200) and a structure (100) according to any one of claims 1 to 6 attached to the at least one underwater sheet pile (200) for forming an artificial reef.

10. The assembly of claim 9, wherein the attachment means comprises at least one mounting bracket (500), preferably at least a portion of the mounting bracket (500) is made of metal, preferably the same metal as the at least one sheet pile (200), preferably weldable metal, the at least one mounting bracket (500) connecting the structure (100) to the at least one underwater sheet pile (200).

11. The assembly of claim 10, wherein the attachment means comprises one or more magnets (300), the one or more magnets (300) attaching the mounting bracket (500) to the at least one underwater sheet pile (200).

12. The assembly of any one of claims 9 to 11, wherein the structure (100) comprises a plurality of cavities or channels (400), the cavities or channels (400) preferably being open-ended (450) or forming a passageway though the structure (100).

13. The assembly of any one of claims 9 to 12 when depending on claim 10, wherein a water passageway (600) is provided between the structure (100) and the sheet pile (200), and/or between the at least one mounting bracket (500) and the at least one under water sheet pile (200).

14. The assembly of any one of claims 9 to 13, wherein the indentation (250) is formed between a bottom web (230) of a row of sheet piles (200), a first side web (210) of the row of sheet piles (200), the first side web (210) extending obliquely or perpendicularly from a first edge of the bottom web (230), and a second side web (220) of the row of sheet piles (200) the second side web (220) extending obliquely or perpendicularly from a second edge of the bottom web (230) that is opposite to the first edge (210), wherein the attachment means connect a first lateral side of the structure (100) to the first side web (210) and the second lateral side (220) to the second side web (210) with a water passageway (600) between the bottom web (230) and the structure (100) or the attachment means connect the bottom web (230) with the structure (100), preferably with a water passageway (600) between the bottom web (230) and the structure (100).

## Patentansprüche

1. Eine Struktur (100) zum Befestigen an mindestens einer Unterwasser-Spundwand (200) zum Herstellen eines künstlichen Riffs, die Struktur (100) umfassend:
ein oder mehrere Befestigungsmittel,
wobei mindestens ein Abschnitt der Struktur (100) aus einem Steinmaterial wie Beton, Ton und/oder Zement besteht, und
mindestens ein Abschnitt der Struktur (100) additiv gefertigt ist,
**dadurch gekennzeichnet, dass**
der aus einem Steinmaterial, wie beispielsweise Beton, Ton und/oder Zement, bestehende Abschnitt das künstliche Riff bildet,
die Struktur (100) mit ihren einem oder mehreren Befestigungsmitteln so geformt und dimensioniert ist, dass sie sich an eine Vertiefung (250) der mindestens einen Unterwasser-Spundwand (200) anpasst und darin angeordnet ist oder in einer Vertiefung (250), die durch eine Reihe ineinandergreifender Unterwasser-Spundwände (200) hergestellt wird, wobei die Vertiefung eine zumindest im Wesentlichen trapezförmige Kontur aufweist und die Struktur (100) mit ihren Befestigungsmitteln so geformt und dimensioniert ist, dass die Geometrie der Außenoberfläche der Struktur (100) mit ihren Befestigungsmitteln zumindest im Wesentlichen der Kontur der Vertiefung (250) entspricht, wodurch eine komplementäre Einpassung entlang mindestens eines Abschnitts der Länge und Tiefe der Vertiefung (250) ermöglicht wird.

2. Struktur (100) nach Anspruch 1, wobei die Struktur (100) mit ihren Befestigungsmitteln so geformt und dimensioniert ist, dass sie in die Vertiefung (250) passt, wobei zwischen der Struktur (100) und dem tiefsten Abschnitt der Vertiefung ein Wasserdurchgang (600) hergestellt wird.

3. Struktur (100) nach Anspruch 1 oder 2, wobei die Vertiefung (250) zwischen einem Bodensteg (230) einer Reihe von Spundwänden (200), einem ersten Seitensteg (210) der Reihe von Spundwänden (200), wobei sich der erste Seitensteg (210) schräg oder senkrecht von einer ersten Kante des Bodenstegs (230) erstreckt, und einem zweiten Seitensteg (220) der Reihe von Spundwänden (200), wobei sich der zweite Seitensteg (220) schräg oder senkrecht von einer zweiten Kante des Bodenstegs (230) erstreckt, die der ersten Kante (210) gegenüberliegt, hergestellt wird, wobei die Befestigungsmittel eine erste Seitenfläche der Struktur (100) mit dem ersten Seitensteg (210) und die zweite Seitenfläche (220) mit dem zweiten Seitensteg (210) verbinden, wobei sich ein Wasserdurchgang (600) zwischen dem Bodensteg (230) und der Struktur (100) befindet, oder die Befestigungsmittel den Bodensteg (230) mit der Struktur (100) verbinden, vorzugsweise mit einem Wasserdurchgang (600) zwischen dem Bodensteg (230) und der Struktur (100).

4. Struktur (100) nach einem der Ansprüche 1 bis 3, wobei die Befestigungsmittel mindestens einen Metallmontagebügel (500) umfassen, der zum Anschweißen an die mindestens eine Unterwasser-Spundwand (200) konfiguriert ist.

5. Struktur (100) nach einem der Ansprüche 1 bis 4, wobei die Struktur (100) ein oder mehrere miteinander verbundene wellenförmige Segmente umfasst, wobei jedes Segment eine abwechselnde Folge von konvexen und konkaven Oberflächen definiert, wobei benachbarte Segmente entlang ihrer Längskanten integral verbunden sind, um ein kontinuierliches, wellenförmiges Profil herzustellen, wobei die Struktur (100) vorzugsweise interne Kanäle (400) einschließt, die sich entlang der Länge jedes Segments erstrecken und so konfiguriert sind, dass sie den Wasserdurchfluss, die Ansammlung von Sedimenten und die Besiedelung mit Meereslebewesen fördern.

6. Struktur (100) nach einem der Ansprüche 1 bis 5, wobei die Struktur (100) eine Reihe gekrümmter, sich überlappender Segmente umfasst, die in einer gestapelten Konfiguration angeordnet sind, wobei jedes Segment ein konkaves und konvexes Profil definiert und ein wellenförmiges, stufenartiges Profil herstellt, wobei die Segmente vorzugsweise in einem Winkelversatz zueinander positioniert sind, wodurch interne Durchgänge und Hohlräume entstehen, die den Wasserdurchfluss, die Ansammlung von Sedimenten und die Besiedelung mit Meereslebewesen fördern.

7. Verfahren zum Befestigen einer Struktur (100) an einer oder mehreren Unterwasser-Spundwänden (200), wobei die Struktur (100) die Struktur (100) nach einem der Ansprüche 1 bis 6 ist, wobei das Verfahren umfasst:
Bereitstellen einer additiv gefertigten Struktur (100),
Bereitstellen mindestens eines Montagebügels (500),
Befestigen der Struktur (100) an dem Montagebügel (500),
Positionieren des Montagebügels in einer Vertiefung (250) von:
einer Spundwand (200) und/oder
einer Vielzahl miteinander verbundener Spundwände (200), vorzugsweise einer Reihe miteinander verbundener Spundwände (200),
und
optional das mindestens teilweise Beimpfen und/oder Beschichten der Struktur (100) mit Algen und/oder anderen Meeresorganismen.

8. Verfahren nach Anspruch 7, wobei die Vertiefung durch Stege (210, 220, 230) der einen Spundwand (200) und/oder einer Vielzahl miteinander verbundener Spundwände (200) hergestellt wird und das Verfahren das Befestigen des mindestens einen Montagebügels (500) an einem oder mehreren der Stege (210, 220, 230) umfasst.

9. Anordnung aus mindestens einer Unterwasser-Spundwand (200) und einer Struktur (100) nach einem der Ansprüche 1 bis 6, die an der mindestens einen Unterwasser-Spundwand (200) befestigt ist, um ein künstliches Riff herzustellen.

10. Anordnung nach Anspruch 9, wobei das Befestigungsmittel mindestens einen Montagebügel (500) umfasst, wobei vorzugsweise mindestens ein Abschnitt des Montagebügels (500) aus Metall besteht, vorzugsweise aus demselben Metall wie die mindestens eine Spundwand (200), vorzugsweise aus schweißbarem Metall, wobei der mindestens eine Montagebügel (500) die Struktur (100) mit der mindestens einen Unterwasser-Spundwand (200) verbindet.

11. Anordnung nach Anspruch 10, wobei das Befestigungsmittel einen oder mehrere Magnete (300) umfasst, wobei der eine oder die mehreren Magnete (300) den Montagebügel (500) an der mindestens einen Unterwasser-Spundwand (200) befestigen.

12. Anordnung nach einem der Ansprüche 9 bis 11, wobei die Struktur (100) eine Vielzahl von Hohlräumen oder Kanälen (400) umfasst, wobei die Hohlräume oder Kanäle (400) vorzugsweise offen (450) sind oder einen Durchgang durch die Struktur (100) herstellen.

13. Anordnung nach einem der Ansprüche 9 bis 12, wobei, sofern sie auf Anspruch 10 basiert, ein Wasserdurchgang (600) zwischen der Struktur (100) und der Spundwand (200) und/oder zwischen dem mindestens einen Montagebügel (500) und der mindestens einen Unterwasser-Spundwand (200) bereitgestellt wird.

14. Anordnung nach einem der Ansprüche 9 bis 13, wobei die Vertiefung (250) zwischen einem Bodensteg (230) einer Reihe von Spundwänden (200), einem ersten Seitensteg (210) der Reihe von Spundwänden (200), wobei sich der erste Seitensteg (210) schräg oder senkrecht von einer ersten Kante des Bodenstegs (230) erstreckt, und einem zweiten Seitensteg (220) der Reihe von Spundwänden (200), wobei sich der zweite Seitensteg (220) schräg oder senkrecht von einer zweiten Kante des Bodenstegs (230) erstreckt, die der ersten Kante (210) gegenüberliegt, hergestellt wird, wobei die Befestigungsmittel eine erste Seitenfläche der Struktur (100) mit dem ersten Seitensteg (210) und die zweite Seitenfläche (220) mit dem zweiten Seitensteg (210) verbinden, wobei sich ein Wasserdurchgang (600) zwischen dem Bodensteg (230) und der Struktur (100) befindet, oder die Befestigungsmittel den Bodensteg (230) mit der Struktur (100) verbinden, vorzugsweise mit einem Wasserdurchgang (600) zwischen dem Bodensteg (230) und der Struktur (100).

## Revendications

1. Structure (100) destinée à être fixée à au moins une palplanche sous-marine (200) pour former un récif artificiel, la structure (100) comprenant :
un ou plusieurs moyens de fixation,
au moins une partie de la structure (100) étant réalisée en un matériau pierreux, tel que du béton, de l'argile et/ou du ciment, et
au moins une partie de la structure (100) étant fabriquée par fabrication additive,
**caractérisée en ce que**
ladite partie réalisée en un matériau pierreux, tel que du béton, de l'argile et/ou du ciment, forme le récif artificiel,
la structure (100) avec son ou ses moyens de fixation est façonnée et dimensionnée pour épouser et être agencée à l'intérieur d'une indentation (250) de l'au moins une palplanche sous-marine (200) ou dans une indentation (250) formée par une rangée de palplanches sous-marines (200) emboîtables, l'indentation présentant un contour au moins sensiblement trapézoïdal, et la structure (100) avec ses moyens de fixation est façonnée et dimensionnée de sorte que la géométrie de surface extérieure de la structure (100) avec ses moyens de fixation correspond au moins sensiblement au contour de l'indentation (250), permettant ainsi un ajustement complémentaire sur au moins une partie de la longueur et de la profondeur de l'indentation (250).

2. Structure (100) de la revendication 1, dans laquelle la structure (100), avec ses moyens de fixation, est façonnée et dimensionnée pour s'ajuster dans l'indentation (250) avec un passage d'eau (600) formé entre la structure (100) et la partie la plus profonde de l'indentation.

3. Structure (100) de la revendication 1 ou 2, dans laquelle l'indentation (250) est formée entre une âme inférieure (230) d'une rangée de palplanches (200), une première âme latérale (210) de la rangée de palplanches (200), la première âme latérale (210) s'étendant obliquement ou perpendiculairement à partir d'un premier bord de l'âme inférieure (230), et une seconde âme latérale (220) de la rangée de palplanches (200), la seconde âme latérale (220) s'étendant obliquement ou perpendiculairement à partir d'un second bord de l'âme inférieure (230) qui est opposé au premier bord (210), dans laquelle les moyens de fixation relient un premier côté latéral de la structure (100) à la première âme latérale (210) et le second côté latéral (220) à la seconde âme latérale (210) avec un passage d'eau (600) entre l'âme inférieure (230) et la structure (100), ou les moyens de fixation relient l'âme inférieure (230) à la structure (100), de préférence avec un passage d'eau (600) entre l'âme inférieure (230) et la structure (100).

4. Structure (100) de l'une quelconque des revendications 1 à 3, dans laquelle les moyens de fixation comprennent au moins un support de montage (500) en métal configuré pour être soudé à l'au moins une palplanche sous-marine (200).

5. Structure (100) de l'une quelconque des revendications 1 à 4, dans laquelle la structure (100) comprend un ou plusieurs segments ondulés interconnectés, chaque segment définissant une séquence alternée de surfaces convexes et concaves, dans lesquels les segments adjacents sont reliés d'un seul tenant le long de leurs bords longitudinaux pour former un profil ondulant continu, de préférence la structure (100) comprend des canaux internes (400) s'étendant sur la longueur de chaque segment, configurés pour faciliter l'écoulement de l'eau, l'accumulation de sédiments, et l'habitation de la faune et flore marines.

6. Structure (100) de l'une quelconque des revendications 1 à 5, dans laquelle la structure (100) comprend une série de segments courbes en chevauchement agencés en une configuration empilée, chaque segment définissant un profil concave et convexe, formant une structure ondulante en gradins, dans lesquels les segments sont de préférence positionnés avec un décalage angulaire les uns par rapport aux autres, créant des passages internes et des cavités qui facilitent l'écoulement de l'eau, le dépôt de sédiments, et l'habitation de la faune et flore marines.

7. Procédé de fixation d'une structure (100) à une ou plusieurs palplanches sous-marines (200), la structure (100) étant la structure (100) selon l'une quelconque des revendications 1 à 6, dans lequel le procédé comprend :
la fourniture d'une structure (100) fabriquée par fabrication additive,
la fourniture d'au moins un support de montage (500),
la fixation de la structure (100) au support de montage (500),
le positionnement du support de montage dans une indentation (250) de :
une palplanche (200) et/ou
une pluralité de palplanches (200) interconnectées, de préférence une rangée de palplanches (200) interconnectées,
et
éventuellement l'inoculation et/ou le revêtement, au moins en partie, de la structure (100), avec des algues et/ou tout autre organisme marin.

8. Procédé de la revendication 7, dans lequel l'indentation est formée par les âmes (210, 220, 230) de la palplanche (200) et/ou d'une pluralité de palplanches (200) interconnectées, et le procédé comprend la fixation de l'au moins un support de montage (500) à une ou plusieurs des âmes (210, 220, 230).

9. Ensemble d'au moins une palplanche sous-marine (200) et d'une structure (100) selon l'une quelconque des revendications 1 à 6 fixée à l'au moins une palplanche sous-marine (200) pour former un récif artificiel.

10. Ensemble de la revendication 9, dans lequel le moyen de fixation comprend au moins un support de montage (500), de préférence au moins une partie du support de montage (500) est réalisée en métal, de préférence le même métal que l'au moins une palplanche (200), de préférence un métal soudable, l'au moins un support de montage (500) reliant la structure (100) à l'au moins une palplanche sous-marine (200).

11. Ensemble de la revendication 10, dans lequel le moyen de fixation comprend un ou plusieurs aimants (300), le ou les aimants (300) fixant le support de montage (500) à l'au moins une palplanche sous-marine (200).

12. Ensemble de l'une quelconque des revendications 9 à 11, dans lequel la structure (100) comprend une pluralité de cavités ou de canaux (400), les cavités ou canaux (400) étant de préférence ouverts à leurs extrémités (450) ou formant un passage à travers la structure (100).

13. Ensemble de l'une quelconque des revendications 9 à 12, lorsqu'elle dépend de la revendication 10, dans lequel un passage d'eau (600) est prévu entre la structure (100) et la palplanche (200), et/ou entre l'au moins un support de montage (500) et l'au moins une palplanche sous-marine (200).

14. Ensemble de l'une quelconque des revendications 9 à 13, dans lequel l'indentation (250) est formée entre une âme inférieure (230) d'une rangée de palplanches (200), une première âme latérale (210) de la rangée de palplanches (200), la première âme latérale (210) s'étendant obliquement ou perpendiculairement à partir d'un premier bord de l'âme inférieure (230), et une seconde âme latérale (220) de la rangée de palplanches (200), la seconde âme latérale (220) s'étendant obliquement ou perpendiculairement à partir d'un second bord de l'âme inférieure (230) qui est opposé au premier bord (210), dans lequel les moyens de fixation relient un premier côté latéral de la structure (100) à la première âme latérale (210) et le second côté latéral (220) à la seconde âme latérale (210) avec un passage d'eau (600) entre l'âme inférieure (230) et la structure (100), ou les moyens de fixation relient l'âme inférieure (230) à la structure (100), de préférence avec un passage d'eau (600) entre l'âme inférieure (230) et la structure (100).
